# FASCICULE DE BREVET EUROPEEN

(11) **EP 1 125 661 B1**
(45) Date de publication et mention de la délivrance du brevet: **25.09.2002**
(21) Numéro de dépôt: 00410074.9
(22) Date de dépôt: 12.07.2000
(51) Int. Cl.: B23B 43/02, B23B 5/14, B23Q 5/04, B23Q 7/00, B23Q 5/34, B26F 1/00

(54) **Dispositif de perçage radial pour tour**
Radialbohreinrichtung einer Drehmaschine
Radial drilling device for a lathe

(30) Priorité: 14.02.2000 FR 0001776
(43) Date de publication de la demande: 22.08.2001
(73) Titulaire: Monnet, Thierry, 74950 Scionzier (FR)
(72) Inventeur: Monnet, Thierry, 74950 Scionzier (FR)
(74) Mandataire: Gasquet, Denis

(56) Documents cités:
- EP-A- 0 240 946
- DE-A- 1 913 377
- DE-C- 19 534 167
- FR-A- 1 578 566
- US-A- 3 957 386
- US-A- 5 662 524

## Description

La présente invention concerne un dispositif de perçage radial destiné à équiper des tours pour permettre le perçage de trous radiaux dans une pièce. Un tel dispositif est décrit par example dans DE-C-19534167.

Dans le domaine du décolletage, de nombreuses pièces usinées à l'aide tours nécessitent le perçage d'un trou transversalement selon un de ses diamètres. Cette opération est actuellement réalisée à l'aide d'un forêt disposé radialement sur le tour et destiné à percer la pièce en l'accostant selon son diamètre. Toutefois, cette opération présente de nombreux inconvénients et notamment celui de nécessiter l'arrêt de la rotation de la pièce à percer pour permettre la réalisation du perçage. De plus, elle nécessite l'utilisation d'un outil qui vient de manière radiale par le côté de la pièce, alors que sur la plupart des machines outils et notamment les tours, l'espace situé latéralement autour de la pièce est généralement très encombré par les outils, les arrivées d'huile ou des capteurs, par exemple.

Ainsi, les outils de perçage radial utilisés sur les tours à l'heure actuelle ne donnent pas entière satisfaction car ils rallongent sensiblement les opérations d'usinage et freinent ainsi la production et le rendement des machines outils de l'atelier.

La présente invention a pour objectif de résoudre les inconvénients précités à l'aide de moyens simples, fiables et faciles à mettre en oeuvre. Elle a pour but de faciliter les opérations de perçage radial que l'on réalise sur les tours et d'accélérer lesdits perçages pour augmenter le rendement du tour.

Selon sa caractéristique principale, le dispositif de perçage radial pour tour de l'invention est destiné à percer de manière radiale une pièce en rotation portée par le tour, il comporte des moyens de perçage formés par au moins un forêt porté par un mord de perçage mobile dans un plan transversal orthogonal à l'axe de révolution de la pièce à percer, et est caractérisé en ce qu'il comporte un ensemble rotatif principal de perçage qui porte les moyens de perçage et qui met en rotation les moyens de perçage autour de l'axe longitudinal de révolution de la pièce à la même vitesse de rotation que celle de la pièce à percer initiée par le tour.

Selon une autre caractéristique du dispositif de perçage radial pour tour de l'invention, celui-ci est caractérisé en ce que l'ensemble rotatif principal de perçage est monté sur une contre broche du tour et est formé par deux sous-ensembles solidaires en rotation autour de l'axe longitudinal du dispositif pour subir une rotation synchronisée avec celle de la pièce à percer, un sous-ensemble d'appui et un sous-ensemble de perçage dont le mouvement relatif par rapport au sous-ensemble d'appui commande le mouvement radial du ou des mords de perçage.

Selon une caractéristique complémentaire du dispositif de perçage radial pour tour de l'invention, celui-ci est caractérisé en ce qu'il est destiné à être monté sur le tour dans le prolongement de la pièce à percer pour être déplacé longitudinalement selon l'axe de révolution de la pièce, ledit déplacement provoquant le mouvement relatif des sous-ensembles d'appui et de perçage entre eux.

Selon le mode de réalisation préféré du dispositif de perçage radial pour tour de l'invention, l'ensemble rotatif principal comprend un sous-ensemble de perçage qui porte les forêts par le biais de mords de perçage mobiles radialement et un sous-ensemble d'appui dont le mouvement relatif en translation selon l'axe longitudinal du dispositif par rapport au sous-ensemble de perçage provoque le déplacement radial des mords de perçage grâce à un système de rampes et de surfaces d'appui qui coopèrent.

Selon ce mode de réalisation, le sous-ensemble de perçage comprend un organe de commande principal destiné à être mis en mouvement par la pièce à percer par rapport au sous-ensemble d'appui, lors du déplacement longitudinal entre le dispositif et la pièce, pour entraîner en translation longitudinale le ou les mords de perçage qui présentent des rampes destinées à coopérer avec des surfaces d'appui d'un organe d'appui du sous-ensemble d'appui.

Par ailleurs, le dispositif de perçage radial pour tour comporte un ensemble d'entraînement destiné à mettre en rotation autour de leur axe propre le ou les forêts.

Selon une caractéristique complémentaire du dispositif de perçage radial pour tour de l'invention, celui-ci est caractérisé en ce que le ou les forêts sont montés libres en rotation dans le ou les mords de perçage et portent des pignons destinés à coopérer par engrènement avec une couronne d'entraînement de l'ensemble d'entraînement immobile en rotation lorsque les mords portés par l'ensemble rotatif effectuent une rotation autour de l'axe longitudinal du dispositif.

Selon le mode de réalisation préféré du dispositif de perçage radial pour tour de l'invention, les pignons des forêts et la couronne d'entraînement coopèrent par engrènement quelle que soit la position radiale des mords de perçage qui portent les forêts.

Selon une autre caractéristique du dispositif de perçage radial pour tour de l'invention, celui-ci est caractérisé en ce que la couronne d'entraînement est montée sur un organe mobile d'entraînement immobile en rotation autour de l'axe longitudinal mais solidaire en déplacement longitudinal du sous-ensemble de perçage pour maintenir en coopération les pignons et la couronne d'entraînement.

Selon le mode de réalisation préféré du dispositif de perçage radial pour tour de l'invention, celui-ci est caractérisé en ce qu'il comprend deux forêts diamétralement opposés, portés par deux mords de perçage.

D'autres caractéristiques et avantages de l'invention se dégageront de la description qui va suivre en regard des dessins annexés qui ne sont donnés qu'à titre d'exemples non limitatifs.

Les figures 1 à 3 illustrent le dispositif de perçage radial de l'invention.

La figure 1 représente en perspective de trois quarts arrière le dispositif de perçage radial.

La figure 2 illustre en perspective de trois quarts avant le dispositif de perçage venant accoster la pièce à percer.

La figure 3 représente le dispositif de perçage radial en coupe longitudinale.

Selon l'invention, le dispositif de perçage radial portant la référence générale (1) est du type destiné à être monté sur un tour (5) pour percer des trous de manière radiale dans une pièce (4) portée par le tour.

Il comprend des moyens de perçage (MP) formés par au moins un forêt (2a, 2b) porté par un mord de perçage (3a, 3b) mobile dans un plan transversal (T) orthogonal à l'axe de révolution (XX') de la pièce à percer (4). Selon l'invention, les moyens de perçage (MP) du dispositif de perçage radial (1) sont mis en rotation autour de l'axe de révolution (XX') de la pièce (4) à la même vitesse de rotation que celle de la pièce (4) initiée par le tour (5). Pour ce faire, le dispositif de perçage radial comprend un ensemble rotatif principal de perçage (ERP) qui comporte les moyens de perçage (MP) et qui est destiné à être synchronisé en rotation avec la pièce à percer (4). Cet ensemble rotatif (ERP) est libre en rotation dans un ensemble d'entraînement externe (EE) fixe, il est ainsi destiné à être solidarisé à une contre broche du tour (5) pour subir une rotation identique à celle de la pièce (4).

Selon le mode de réalisation préféré du dispositif de perçage (1) illustré, celui-ci comprend deux forêts (2a, 2b) montés libres en rotation par rapport aux mords de perçage (3a, 3b) qui les portent autour de leurs axes respectifs (YY') grâce à des roulements de type classique (6).

Ces forêts sont, par exemple, disposés pour être diamétralement opposés, et leur mouvement radial l'un vers l'autre et inversement est obtenu grâce à l'ensemble rotatif de perçage (ERP) qui gère, d'une part, la rotation synchronisée des mords avec la pièce à percer (4), et d'autre part, le rapprochement et l'écartement des mords entre eux. Notons que la rotation propre des forêts (2a, 2b) autour de leur axe (YY') est obtenue grâce à l'ensemble d'entraînement externe (EE) comme il sera décrit plus loin.

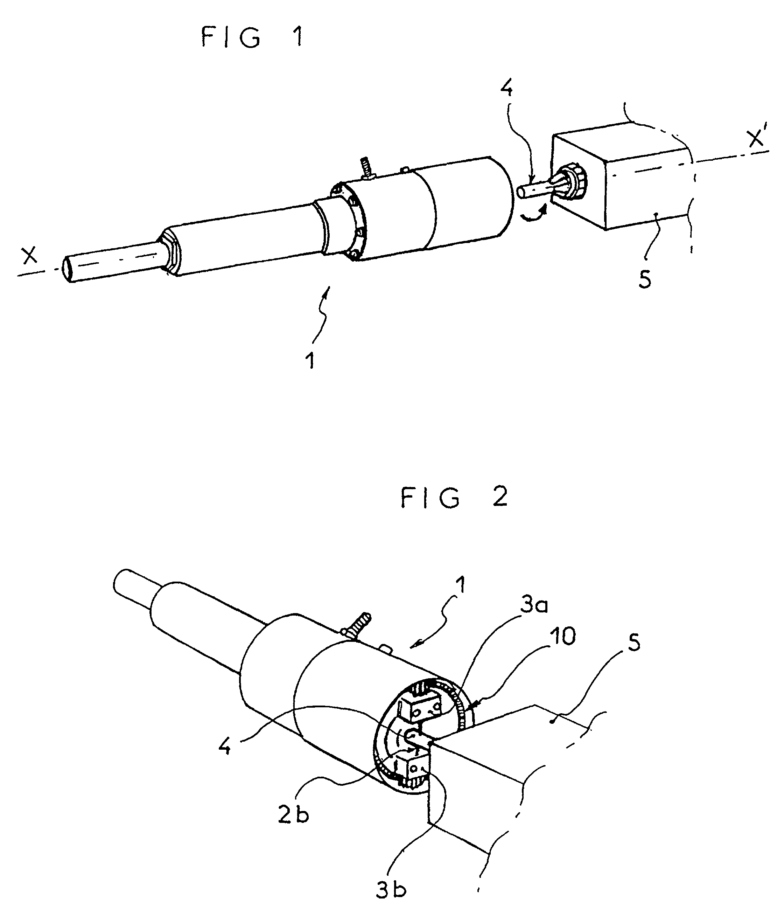

Ainsi, comme le montrent les figures 1 et 2, le dispositif de perçage (1) est destiné à percer des trous radialement dans une pièce de révolution (4) et est avantageusement utilisé sur des tours (5). Il présente, grâce à la configuration spécifique de ses moyens de perçage, l'avantage de venir accoster la pièce à percer (4) selon l'axe de révolution (XX') de la pièce et il se positionne alors dans le prolongement de la pièce de manière à faire coïncider son axe de révolution (ZZ') avec celui de la pièce (XX') contrairement aux outils classiques du tour qui viennent usiner radialement et qui occupent ainsi l'espace situé transversalement autour de la pièce (4). Selon l'invention, le mouvement relatif de la pièce à percer (4) et du dispositif de perçage radial (1) pour obtenir le perçage est un mouvement de translation longitudinal le long de l'axe de révolution (XX') de la pièce.

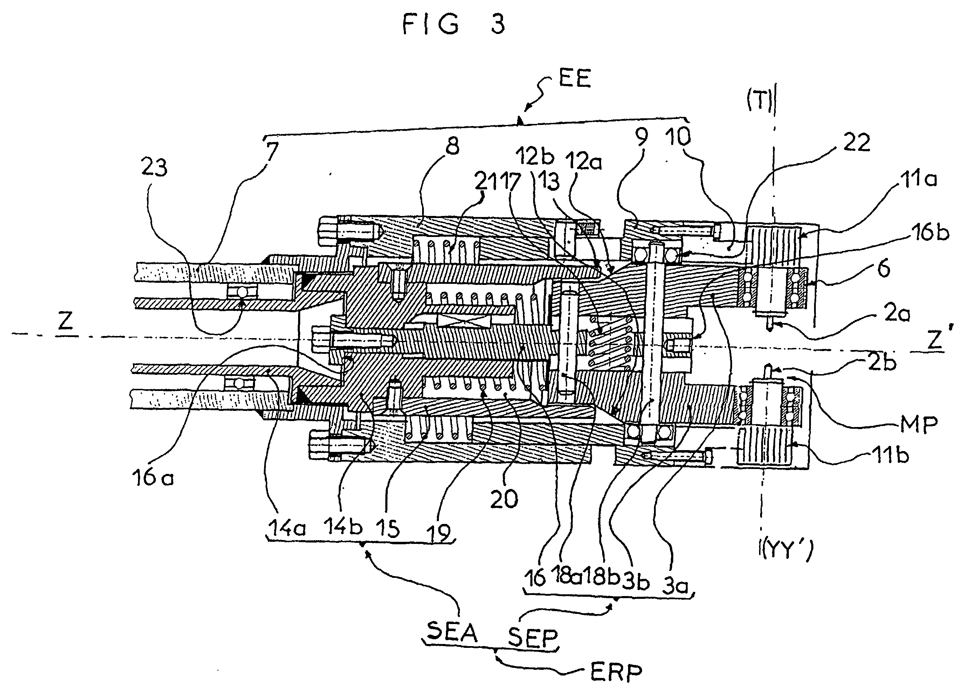

Selon le mode de réalisation illustré figures 1 à 3, l'ensemble rotatif principal (ERP) comprend un sous-ensemble d'appui (SEA) et un sous-ensemble de perçage (SEP), ces deux sous-ensembles étant mobiles en translation l'un par rapport à l'autre selon l'axe longitudinal de révolution (ZZ') du dispositif de perçage radial (1). Le mouvement relatif entre ces deux sous-ensembles provoque le mouvement radial des mords de perçage (3a, 3b) grâce à un système de rampes (12a, 12b) et de surface d'appui (13) qui coopèrent. Notons que ce mouvement relatif entre les deux sous-ensembles est obtenu grâce au mouvement entre le dispositif de perçage (1) et la pièce à percer (4).

Le sous-ensemble d'appui comprend un organe d'appui complémentaire (15) et un arbre d'entrée (14) formé d'un arbre principal (14a) et d'une douille de guidage (14b) sur laquelle l'organe d'appui complémentaire (15) est monté. Le sous-ensemble de perçage (SEP) comprend les mords de perçage (3a, 3b) qui sont montés sur un organe de commande principal (16) destiné à coulisser dans un alésage de la douille de guidage (14b), ledit coulissement provoquant la coopération entre les rampes (12a, 12b) situées sur les mords (3a, 3b) et les surfaces d'appui (13a, 13b) situées sur l'organe d'appui complémentaire (15) entraînant ainsi le mouvement radial des mords. Notons que cette coopération entre le s rampes des mords et les surfaces d'appui s'effectue à l'encontre de moyens de rappel élastiques tels qu'un ressort (17) disposé transversalement entre les mords (3a, 3b) pour les solliciter en écartement.

Selon le mode de réalisation illustré du dispositif de perçage radial (1) de l'invention, l'organe de commande principal (16) porte deux tiges de guidage radiales (18a, 18b) destinées d'une part à entraîner les mords (3a, 3b) en translation longitudinale et d'autre part à guider leur mouvement radial entre eux. Il est disposé le long de l'axe de révolution (ZZ') du dispositif et présente à son extrémité arrière une surface de butée arrière (16a) destinée à venir en appui contre une surface complémentaire de l'arbre d'entrée (14a, 14b) lorsque l'organe de commande est en position d'attente. Il présente à son autre extrémité une surface d'appui (16b) destinée à coopérer longitudinalement avec la pièce à percer (4) afin de provoquer le mouvement respectif entre le sous-ensemble d'appui et le sous-ensemble de perçage lorsque le dispositif de perçage et la pièce subissent leur déplacement respectif. Ce mouvement longitudinal de l'organe de commande (16) s'effectue à l'encontre de moyens de rappel élastiques constitués par un ressort (19) qui sollicite le dispositif en position d'attente, ce ressort (19) étant disposé longitudinalement entre les mords de perçage (3a, 3b) et la douille d'appui et de guidage (14b).

On peut noter que l'organe d'appui complémentaire (15) est constitué par un corps cylindrique fixé à la douille (14b) à l'une de ses extrémités et présentant sa surface d'appui (13) à l'autre de ses extrémités, tandis que son alésage forme un logement (20) dans lequel est disposé le ressort de rappel (19). L'ensemble rotatif principal de perçage (ERP) formé des sous-ensembles de perçage et d'appui (SEP, SEA) précédemment décrit est avantageusement disposé à l'intérieur des alésages successifs des organes d'entraînement (7, 8, 9, 10) qui forment l'ensemble d'entraînement externe (EE) destiné à mettre en rotation les forêts (2a, 2b) qui sont portés par les mords.

Selon l'invention, le dispositif de perçage radial (1) comprend un ensemble rotatif principal (ERP) destiné à commander la rotation synchronisée des mords (3a, 3b) avec la pièce (4) et le mouvement radial des forêts (2a, 2b) par le biais des mords (3a, 3b) qui les portent et un ensemble d'entraînement (EE) destiné à mettre les forêts (2a, 2b) en rotation sur eux-mêmes. L'ensemble d'entraînement (EE) est fixe et comprend un arbre principal (7) solidaire d'un arbre complémentaire (8), lui-même relié à un organe mobile d'entraînement (9) qui porte à son extrémité une couronne d'entraînement (10). La couronne d'entraînement (10) coopère par engrènement avec des roues dentées ou pignons (11a, 11b) solidaires ou portées par les forêts (2a, 2b). De ce fait, lorsque l'ensemble rotatif est mis en rotation par rapport à l'ensemble d'entraînement externe (EE) grâce à la contre broche du tour (5), les mords (3a, 3b), les forêts (2a, 2b) et leurs pignons respectifs (11a, 11b) sont mis en rotation autour de l'axe de révolution (ZZ') du dispositif et les forêts subissent alors une rotation propre autour de leur axe de révolution propre (YY') respectifs grâce aux pignons qui parcourent la couronne (10) avec laquelle ils coopèrent par engrènement.

Selon le mode de réalisation illustré du dispositif de perçage radial (1) de l'invention, la couronne d'entraînement (10) qui coopère avec les roues dentées ou pignons (11a, 11b) des forêts (2a, 2b) est mobile en translation longitudinale pour pouvoir suivre le mouvement de translation du sous-ensemble de perçage (SEP) de la pièce (4) et des forêts (2a, 2b) afin que les roues dentées des forêts et la couronne soient en permanence en coopération. Pour ce faire, la couronne (10) est montée fixe sur un organe mobile d'entraînement (9) solidaire en rotation de l'arbre complémentaire (8) mais susceptible de subir une translation longitudinale à l'encontre de moyens de rappel élastiques tels qu'un ressort (21). Cette translation identique à la translation générale du sous-ensemble de perçage, de la pièce et des forêts, est commandée par des moyens de liaison disposés à l'extrémité d'une tige de guidage radiale (18b) portée par l'organe de commande principal (16).

Selon l'invention, ces moyens de liaison sont constitués par des roulements (22) destinés à permettre la sollicitation longitudinale de l'organe mobile (9) et de sa couronne (10), tout en permettant à la tige de guidage (18b), à l'organe de commande principal (16) et aux autres éléments de l'ensemble rotatif de perçage (ERP) de subir le mouvement d'entraînement rotatif initié par la contre broche du tour à l'intérieur des organes (7, 8, 9, 10) qui forment l'ensemble d'entraînement externe (EE). Notons que ce mouvement rotatif est possible également grâce à des roulements complémentaires (23) disposés entre l'arbre d'entraînement principal (7) qui est fixe et l'arbre d'entrée (14) de l'ensemble rotatif. On peut également noter que la coopération par engrènement entre les roues dentées (11a, 11b) des forêts et la couronne d'entraînement (10) s'effectue quelle que soit la position radiale des forêts grâce à leurs dimensions respectives. Notons que les pignons présentent une largeur de dents supérieure à la largeur de dents de la couronne, la différence entre ces deux largeurs étant supérieure au déplacement radial des mords pour que les pignons soient en permanence en prise avec la couronne.

Ainsi, le dispositif de perçage radial (1) est destiné à être positionné dans l'axe de la pièce à percer (4) pour que leurs axes de révolution respectifs (ZZ', XX') soient confondus. Lorsque l'on veut percer, le dispositif (1) et la pièce (4) sont mis en mouvement relatif l'un vers l'autre en translation longitudinale selon leur axe (XX', ZZ'), tandis que l'ensemble rotatif principal de perçage (ERP) du dispositif et la pièce (4) sont en rotation synchronisée provoquant notamment, grâce à l'ensemble d'entraînement externe (EE), la rotation des forêts (2a, 2b) sur eux-mêmes. Lorsque la pièce (4) arrive en butée sur la surface (16b) de l'organe de commande principal (16), elle entraîne le sous-ensemble de perçage (SEP) en translation pour provoquer sa coopération avec le sous-ensemble d'appui (SEA) et elle emmène également dans la translation la couronne d'entraînement (10) et l'organe mobile d'entraînement (9). Le déplacement relatif des deux sous-ensembles provoque le rapprochement des mords (3a, 3b) et donc le perçage radial des trous par les forêts (2a, 2b), ce perçage s'effectuant pendant la rotation de la pièce (4).

Selon des variantes d'exécution non représentées, le dispositif de perçage peut comprendre un seul forêt ou plus de deux forêts, lesdits forêts pouvant occuper des positions angulaires différentes en fonction des pièces à réaliser. De plus, on peut noter que les forêts utilisés peuvent être changés facilement grâce à un système de montage rapide qui permet de modifier les dimensions des forêts utilisés (diamètre, longueur). On peut également noter que la surface de butée (16b) de l'organe de commande (16) peut être réglable longitudinalement ou être interchangeable grâce à un système de fixation amovible afin de permettre le réglage de la longueur à laquelle on désire effectuer le perçage sur la pièce (4). Il va de soi que l'on pourrait également prévoir un réglage sur les rampes et les surfaces d'appui afin de choisir la profondeur du perçage et la vitesse du mouvement radial des forêts sans pour autant sortir du champs de protection de l'invention.

## Revendications

1. Dispositif de perçage radial (1) pour tour (5) destiné à percer de manière radiale une pièce (4) en rotation portée par le tour, et comportant des moyens de perçage (MP) formés par au moins un forêt (2a, 2b) porté par un mord de perçage (3a, 3b) mobile dans un plan transversal (T) orthogonal à l'axe de révolution (XX') de la pièce à percer (4), **caractérisé en ce qu'**il comporte un ensemble rotatif principal de perçage (ERP) qui porte les moyens de perçage (MP) et qui met en rotation les moyens de perçage (MP) autour de l'axe longitudinal de révolution (XX') de la pièce (4) à la même vitesse de rotation que celle de la pièce à percer (4) initiée par le tour (5).

2. Dispositif de perçage radial (1) pour tour (5) selon la revendication 1, **caractérisé en ce que** l'ensemble rotatif principal de perçage est monté sur une contre broche du tour (5) et est formé par deux sous-ensembles (SEA, SEP) solidaires en rotation autour de l'axe longitudinal (ZZ') du dispositif (1) pour subir une rotation synchronisée avec celle de la pièce à percer (4), un sous-ensemble d'appui (SEA) et un sous-ensemble de perçage (SEP) dont le mouvement relatif par rapport au sous-ensemble d'appui (SEA) commande le mouvement radial du ou des mords de perçage (3a, 3b).

3. Dispositif de perçage radial (1) pour tour (5) selon la revendication 2, **caractérisé en ce qu'**il est destiné à être monté sur le tour (5) dans le prolongement de la pièce à percer (4) pour être déplacé longitudinalement selon l'axe de révolution (XX') de la pièce (4), ledit déplacement provoquant le mouvement relatif des sous-ensembles d'appui (SEA) et de perçage (SEP) entre eux.

4. Dispositif de perçage radial (1) pour tour (5) selon la revendication 2 ou 3, **caractérisé en ce que** l'ensemble rotatif principal (ERP) comprend un sous-ensemble de perçage (SEP) qui porte les forêts (2a, 2b) par le biais de mords de perçage (3a, 3b) mobiles radialement et un sous-ensemble d'appui (SEA) dont le mouvement relatif en translation longitudinale selon l'axe (ZZ') par rapport au sous-ensemble de perçage (SEP) provoque le déplacement radial des mords de perçage (3a, 3b) grâce à un système de rampes (12a, 12b) et de surfaces d'appui (13a, 13b) qui coopèrent.

5. Dispositif de perçage radial (1) pour tour (5) selon les revendications 3 et 4, **caractérisé en ce que** le sous-ensemble de perçage (SEP) comprend un organe de commande principal (16) destiné à être mis en mouvement par la pièce à percer (4) par rapport au sous-ensemble d'appui, lors du déplacement longitudinal entre le dispositif (1) et la pièce (4), pour entraîner en translation longitudinale le ou les mords de perçage (3a, 3b) qui présentent des rampes (12a, 12b) destinées à coopérer avec des surfaces d'appui (13a, 13b) d'un organe d'appui (15) du sous-ensemble d'appui (SEA).

6. Dispositif de perçage radial (1) pour tour (5) selon l'une quelconque des revendications précédentes, **caractérisé en ce qu'**il comporte un ensemble d'entraînement (EE) destiné à mettre en rotation autour de leur axe propre (YY') le ou les forêts (2a, 2b).

7. Dispositif de perçage radial (1) pour tour (5) selon la revendication 6 et l'une quelconque des revendications 2 à 5, **caractérisé en ce que** le ou les forêts (2a, 2b) sont montés libres en rotation dans le ou les mords de perçage (3a, 3b) et portent des pignons (11a, 11b) destinés à coopérer par engrènement avec une couronne d'entraînement (10) de l'ensemble d'entraînement (EE) immobile en rotation lorsque les mords (3a, 3b) portés par l'ensemble rotatif (ERP) effectuent une rotation autour de l'axe longitudinal (XX').

8. Dispositif de perçage radial (1) pour tour (5) selon la revendication 7, **caractérisé en ce que** les pignons (11a, 11b) des forêts (2a, 2b) et la couronne d'entraînement (10) coopèrent par engrènement quelle que soit la position radiale des mords de perçage (3a, 3b) qui portent les forêts.

9. Dispositif de perçage radial (1) pour tour (5) selon la revendication 7 ou 8, **caractérisé en ce que** la couronne d'entraînement (10) est montée sur un organe mobile d'entraînement (9) immobile en rotation autour de l'axe longitudinal (XX') mais solidaire en déplacement longitudinal du sous-ensemble de perçage pour maintenir en coopération les pignons (11a, 11b) et la couronne d'entraînement (10).

10. Dispositif de perçage radial (1) pour tour (5) selon l'une quelconque des revendications précédentes, **caractérisé en ce qu'**il comprend deux forêts (2a, 2b) diamétralement opposés, portés par deux mords de perçage (3a, 3b).

## Patentansprüche

1. Radialbohreinrichtung (1) einer Drehmaschine (5) zum radialen Aufbohren eines von der Drehmaschine aufgenommenen, sich drehenden Werkstücks (4), umfassend Bohrmittel (MP), die aus mindestens einem Bohrer (2a, 2b) bestehen, der durch in einer senkrecht zur Drehachse (XX') des Werkstücks (4) verlaufenden Transversalebene beweglich gelagerte Bohrbacken (3a, 3b) gehalten wird, **dadurch gekennzeichnet, dass** sie eine drehbare Hauptbohreinheit (ERP) aufweist, die die Bohrmittel (MP) trägt und diese Bohrmittel (MP) um die Längsdrehachse (XX') des Werkstücks (4) mit der gleichen Geschwindigkeit zum Drehen bringt, mit der die Drehmaschine (5) das Werkstück (4) zum Drehen bringt.

2. Radialbohreinrichtung (1) einer Drehmaschine (5) nach Anspruch 1, **dadurch gekennzeichnet, dass** die drehbare Hauptbohreinheit auf einem Gegendorn der Drehmaschine (5) montiert ist und aus zwei Baugruppen (SEA, SEP) besteht, die um die Längsachse (ZZ') der Einrichtung (1) drehfest gelagert sind, so dass sie mit dem Werkstück (4) eine synchronisierte Drehung ausführen, einer Abstützbaugruppe (SEA) und einer Bohrbaugruppe (SEP), deren Relativbewegung im Verhältnis zur Abstützbaugruppe (SEA) die radiale Bewegung der Bohrbacken (3a, 3b) steuert.

3. Radialbohreinrichtung (1) einer Drehmaschine (5) nach Anspruch 2, **dadurch gekennzeichnet, dass** sie an die Drehmaschine (5) in der Verlängerung des Werkstücks (4) derart montierbar ist, dass sie entlang der Drehachse (XX') des Werkstücks (4) translaterisch verschieblich gelagert ist, wobei diese Verschiebung die Relativbewegung zwischen der Abstützbaugruppe (SEA) und der Bohrbaugruppe (SEP) bewirkt.

4. Radialbohreinrichtung (1 einer Drehmaschine (5) nach Anspruch 2 oder 3, **dadurch gekennzeichnet, dass** die drehbare Hauptbohreinheit (ERP) folgende Baugruppen umfasst: eine Bohrbaugruppe (SEP), die über die radial beweglichen Bohrbacken (3a, 3b) die Bohrer (2a, 2b) aufnimmt, und eine Abstützbaugruppe (SEA), deren translaterische Relativbewegung entlang der Achse (ZZ') im Verhältnis zur Bohrbaugruppe (SEP) die radiale Verschiebung der Bohrbacken (3a, 3b) mittels eines Systems von zusammenwirkenden Rampen (12a, 12b) und Abstützflächen (13a, 13b) bewirkt.

5. Radialbohreinrichtung (1) einer Drehmaschine (5) nach den Ansprüchen 3 und 4, **dadurch gekennzeichnet, dass** die Bohrbaugruppe (SEP) eine Hauptsteuerung (16) umfasst, die, bei der Längsverschiebung zwischen der Einrichtung (1) und dem Werkstück (4), durch das Werkstück (4) relativ zur Abstützbaugruppe bewegbar ist, so dass die Bohrbacke(n) (3a, 3b) bei der Längsbewegung mitgenommen wird bzw. werden, wobei diese Bohrbacke(n) Rampen (12a, 12b) aufweist bzw. aufweisen, die dazu ausgebildet sind, mit Abstützflächen (13a, 13b) eines Abstützelements (15) der Abstützbaugruppe (SEA) zusammenzuwirken.

6. Radialbohreinrichtung (1) einer Drehmaschine (5) nach einem der vorstehenden Ansprüche, **dadurch gekennzeichnet, dass** sie eine Antriebseinheit (EE) aufweist, die dazu eingerichtet ist, den bzw. die Bohrer (2a, 2b) um ihre eigene Achse (YY') zum Drehen zu bringen.

7. Radialbohreinrichtung (1) einer Drehmaschine (5) nach Anspruch 6 und einem der Ansprüche 2 bis 5, **dadurch gekennzeichnet, dass** der bzw. die Bohrer (2a, 2b) drehbeweglich in der bzw. den Bohrbacke(n) (3a, 3b) angebracht ist bzw. sind und dass sie Ritzel (11a, 11b) aufweisen, die dazu ausgebildet sind, durch Einspuren mit einem Antriebskranz (10) der Antriebseinheit (EE) zusammenzuwirken, wobei diese Antriebseinheit drehfest ist, wenn die durch die drehbare Einheit (ERP) getragenen Backen (3a, 3b) eine Drehbewegung um die Längsachse (XX') ausführen.

8. Radialbohreinrichtung (1) einer Drehmaschine (5) nach Anspruch 7, **dadurch gekennzeichnet, dass** die Ritzel (11a, 11b) der Bohrer (2a, 2b) und der Antriebskranz (10) unabhängig von der radialen Position der die Bohrer tragenden Bohrbacken (3a, 3b) zusammenwirkend in Eingriff stehen.

9. Radialbohreinrichtung (1) einer Drehmaschine (5) nach Anspruch 7 oder 8, **dadurch gekennzeichnet, dass** der Antriebskranz (10) an einem beweglichen Antriebselement (9) montiert ist, das um die Längsachse (XX') drehfest ist, aber die Längsverschiebung der Bohrbaugruppe mitmacht, um den Eingriff der Ritzel (11a, 11b) und des Antriebskranzes (10) aufrechtzuerhalten.

10. Radialbohreinrichtung (1) einer Drehmaschine (5) nach einem der vorstehenden Ansprüche, **dadurch gekennzeichnet, dass** sie zwei Bohrer (2a, 2b) umfasst, die diametral einander gegenüberliegen und durch zwei Bohrbacken (3a, 3b) gehalten werden.

## Claims

1. Radial drilling device (1) for a lathe (5), intended for radial drilling of a rotating part (4) carried by the lathe, and comprising drilling means (MP) formed by at least one drill (2a, 2b) carried by a drill jaw (3a, 3b) which is movable in a transverse plane (T) at right angles to the rotation axis (XX') of the part which is to be drilled (4), **characterised in that** it comprises a main rotary drilling assembly (ERP) which carries the drilling means (MP) and which rotates the drilling means (MP) about the longitudinal axis of rotation (XX') of the part (4) at the same speed of rotation as that of the part which is to be drilled (4) initiated by the lathe (5).

2. Radial drilling device (1) for a lathe (5) according to claim 1, **characterised in that** the main rotary drilling assembly is mounted on a counter-spindle of the lathe (5) and is formed by two sub-assemblies (SEA, SEP) which are integrally attached for rotation about the longitudinal axis (ZZ') of the device (1), in order to be rotated in synchronism with the part which is to be drilled (4), a supporting sub-assembly (SEA) and a drilling sub-assembly (SEP) the relative movement of which, in relation to the supporting sub-assembly (SEA), controls the radial movement of the or each drill jaw (3a, 3b).

3. Radial drilling device (1) for a lathe (5) according to claim 2, **characterised in that** it is intended to be mounted on the lathe (5) on an extension of the part which is to be drilled (4), in order to be moved longitudinally along the axis of rotation (XX') of the part (4), this movement causing the relative movement of the supporting sub-assembly (SEA) and the drilling sub-assembly (SEP) relative to each other.

4. Radial drilling device (1) for a lathe (5) according to claim 2 or 3, **characterised in that** the main rotary drilling assembly (ERP) comprises a drilling sub-assembly (SEP) which carries the drills (2a, 2b) by means of radially movable drill jaws (3a, 3b) and a supporting sub-assembly (SEA) the relative movement of which, in longitudinal translation along the axis (ZZ') relative to the drilling sub-assembly (SEP), causes radial movement of the drill jaws (3a, 3b) by means of a system of ramps (12a, 12b) and co-operating support surfaces (13a, 13b).

5. Radial drilling device (1) for a lathe (5) according to claims 3 and 4, **characterised in that** the drilling sub-assembly (SEP) comprises a main control member (16) adapted to be set in motion by the part which is to be drilled (4) relative to the supporting sub-assembly, during the longitudinal movement between the device (1) and the part (4), to drive, by longitudinal translation, the drill jaw or jaws (3a, 3b) which comprise ramps (12a, 12b) adapted to co-operate with the support surfaces (13a, 13b) of a support member (15) of the supporting sub-assembly (SEA).

6. Radial drilling device (1) for a lathe (5) according to any one of the preceding claims, **characterised in that** it comprises a drive assembly (EE) adapted to set the drill or drills (2a, 2b) rotating about their own axis (YY').

7. Radial drilling device (1) for a lathe (5) according to claim 6 and any one of claims 2 to 5, **characterised in that** the drill or drills (2a, 2b) are mounted to be freely rotatably in the drill jaw or jaws (3a, 3b) and carry gear wheels (11a, 11b) adapted to co-operate by meshing with a drive crown (10) of the drive assembly (EE) which is secured against rotation when the jaws (3a, 3b) carried by the rotary assembly perform a rotation about the longitudinal axis (XX').

8. Radial drilling device (1) for a lathe (5) according to claim 7, **characterised in that** the gear wheels (11a, 11b) of the drills (2a, 2b) and the drive crown (10) co-operate by meshing irrespective of the radial position of the drill jaws (3a, 3b) which carry the drills.

9. Radial drilling device (1) for a lathe (5) according to claim 7 or 8, **characterised in that** the drive crown (10) is mounted on a movable drive member (9) which is secured against rotation around the longitudinal axis (XX') but fixed for longitudinal displacement with the drilling sub-assembly for maintaining the interaction between the gearwheels (11a, 11b) and the drive crown (10).

10. Radial drilling device (1) for a lathe (5) according to any one of the preceding claims, **characterised in that** it comprises two diametrically opposite drills (2a, 2b) carried by two drill jaws (3a, 3b).
